(19) Europäisches Patentamt / European Patent Office / Office européen des brevets

(11) **EP 2 541 957 B1**

(12) **EUROPÄISCHE PATENTSCHRIFT**

(45) Veröffentlichungstag und Bekanntmachung des Hinweises auf die Patenterteilung:
**19.07.2017 Patentblatt 2017/29**

(21) Anmeldenummer: **12167806.4**

(22) Anmeldetag: **14.05.2012**

(51) Int Cl.:
*H04N 21/2365* (2011.01)   *H04N 21/24* (2011.01)
*H04N 19/37* (2014.01)   *H04N 19/152* (2014.01)
*H04N 19/15* (2014.01)   *H04N 19/124* (2014.01)

(54) **Verfahren und Vorrichtung zur Erzeugung eines aus mehreren Video-Datenströmen zusammengesetzten Transportdatenstroms**

Method and device for creating a transport data stream comprising a number of video data streams

Procédé et dispositif de production d'un flux de données de transport composé de plusieurs flux de données vidéo

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2011   DE 102011078414**
**02.08.2011   DE 102011080253**

(43) Veröffentlichungstag der Anmeldung:
**02.01.2013   Patentblatt 2013/01**

(73) Patentinhaber: **Rohde & Schwarz GmbH & Co. KG**
**81671 München (DE)**

(72) Erfinder:
  • **Zurek-Terhardt, Günther**
    **15566 Schöneiche (DE)**
  • **Voß, Axel**
    **12687 Berlin (DE)**

(74) Vertreter: **Körfer, Thomas**
**Mitscherlich PartmbB**
**Patent- und Rechtsanwälte**
**Sonnenstrasse 33**
**80331 München (DE)**

(56) Entgegenhaltungen:
WO-A1-2011/075160     US-A1- 2002 094 031
US-A1- 2005 010 960

• REZAEI M ET AL: "Joint Video Coding and Statistical Multiplexing for Broadcasting Over DVB-H Channels", IEEE TRANSACTIONS ON MULTIMEDIA, IEEE SERVICE CENTER, PISCATAWAY, NJ, US, Bd. 10, Nr. 8, 1. Dezember 2008 (2008-12-01), Seiten 1455-1464, XP011346561, ISSN: 1520-9210, DOI: 10.1109/TMM.2008.2007315
• HE Z ET AL: "Linear Rate Control and Optimum Statistical Multiplexing for H.264 Video Broadcast", IEEE TRANSACTIONS ON MULTIMEDIA, IEEE SERVICE CENTER, PISCATAWAY, NJ, US, Bd. 10, Nr. 7, 1. November 2008 (2008-11-01), Seiten 1237-1249, XP011346550, ISSN: 1520-9210, DOI: 10.1109/TMM.2008.2004903
• LIMIN WANG ET AL: "Bit Allocation and Constraints for Joint Coding of Multiple Video Programs", IEEE TRANSACTIONS ON CIRCUITS AND SYSTEMS FOR VIDEO TECHNOLOGY, IEEE SERVICE CENTER, PISCATAWAY, NJ, US, Bd. 9, Nr. 6, 1. September 1999 (1999-09-01), XP011014614, ISSN: 1051-8215
• LILLA BÖRÖCZKY ET AL: "Joint Rate Control with Look-Ahead for Multi-Program Video Coding", IEEE TRANSACTIONS ON CIRCUITS AND SYSTEMS FOR VIDEO TECHNOLOGY, IEEE SERVICE CENTER, PISCATAWAY, NJ, US, vol. 10, no. 7, 1 October 2000 (2000-10-01), XP011014108, ISSN: 1051-8215

EP 2 541 957 B1

**Beschreibung**

Die Erfindung betrifft ein Verfahren und eine Vorrichtung zur Erzeugung eines aus mehreren Video-Datenströmen zusammengesetzten Transportdatenstroms.

In der digitalen Fernseh-Übertragung werden mehrere zu jeweils einem Programm gehörige unkomprimierte Video-Datenströme in einem jeweils zugeordneten Quell-Kodierer komprimiert und in einem anschließenden Multiplexer zu einem einzigen digitalen Transportdatenstrom zusammengefasst.

Da die Übertragungskapazität des Übertragungskanals eine fest vorgegebene, zeitinvariante Kenngrösse darstellt, ist die Datenrate des aus einzelnen komprimierten Video-Datenströmen zusammengesetzten Transportdatenstroms konstant auszulegen. Die Datenraten der einzelnen komprimierten Video-Datenströme können entsprechend ihrem Bedarf an Übertragungskapazität ebenfalls konstant ausgelegt werden. Der jeweilige Quell-Kodierer arbeitet dabei im sogenannten Konstant-Datenraten-Betrieb (Constant-Bit-Rate-Mode (CBR-Mode)). Übertragen werden bei dieser Komprimierung insbesondere Änderungen in den Bildinhalten jeweils aufeinander folgender Bilder. Da die Änderungen in den Bildinhalten von jeweils aufeinander folgenden Bildern zeitlich veränderlich sind, ist für jeden komprimierten Videodatenstrom jeweils eine Mindest-Datenrate vorzusehen, in der auch ein zeitweise hoher Datenübertragungsbedarf aufgrund von zeitlich sehr stark veränderlichen Bildinhalten in aufeinander folgenden Bildern abgedeckt werden kann. Im Fall von geringen Änderungen in den Bildinhalten oder von konstanten Bildinhalten zwischen aufeinander folgenden Bildern werden für die nicht benötigten Daten-Bytes der zugewiesenen konstanten Datenrate Null- bzw. Dummy-Bytes übertragen. Dies minimiert nachteilig die Übertragungs-Effizienz der digitalen Fernseh-Übertragung.

Zur Reduzierung von Null- bzw. Dummy-Bytes in den einzelnen komprimierten Video-Datenströmen und damit zur Verbesserung der Übertragung-Effizienz wird ein statistischer Multiplexer verwendet, der auf der Basis von statistischen Datenanalysen den durchschnittlichen Datenübertragungsbedarf in jeweils zeitlich begrenzten Zeiträumen für jeden einzelnen Video-Datenstrom schätzt und darauf aufbauend den einzelnen Video-Datenströmen jeweils für einen zeitlich begrenzten Zeitraum bei minimierten Null- bzw. Dummy-Bytes jeweils eine optimierte konstante Datenrate zuweist. Über einem größeren Zeithorizont weist somit jeder einzelne komprimierte Video-Datenstrom jeweils eine zeitlich veränderliche Datenrate auf, während der aus den einzelnen komprimierten Video-Datenströmen zusammengesetzte Transportdatenstrom eine zeitlich konstante Datenrate besitzt. Hinsichtlich der Funktionsweise eines statistischen Multiplexers sei auf die DE 10 2008 017 290 A1 verwiesen.

Der statistische Multiplexer weist jedem Video-Datenstrom eine Datenrate zu, die zumindest innerhalb eines bestimmten Zeitraums konstant ist, gewährleistet aber nachteilig noch lange nicht, dass eine möglichst hohe Übertragungsqualität in möglichst allen komprimierten Video-Datenströmen über einen möglichst langen Zeitraum herrscht.

Aufgabe der Erfindung ist es deshalb, eine Vorrichtung und ein Verfahren zur Erzeugung eines aus mehreren Video-Datenströmen zusammengesetzten Transportdatenstroms mit einer möglichst hohen Übertragungsqualität in möglichst allen Video-Datenströmen über einen möglichst langen Zeitraum bei optimaler Ausnutzung der im Übertragungskanal zur Verfügung stehenden Übertragungskapazität zu schaffen.

Das Dokument Rezaei M et al: "Joint Video Coding and Statistical Multiplexing for Broadcasting over DVB-H Channels", IEEE TRANSACTIONS ON MULTIMEDIA, IEEE SERVICE CENTER, PISCATAWAY, NJ, US, Bd. 10, Nr. 8, 1. Dezember 2008, Seiten 1455-1464, ISSN: 1520-9210, zeigt den Einsatz von look-ahead processing zur Optimierung der Bildqualität von gemeinsam übertragenen Videodatenströmen.

Das Dokument HE Z et al: "Linear rate control and optimum statistical multiplexing for H.264 video broadcast", IEEE TRANSACTIONS ON MULTIMEDIA, IEEE SERVICE CENTER, PISCATAWAY, NJ, US, Bd. 10, Nr. 7, 1. November 2008, Seiten 1237-1249, ISSN: 1520-9210, zeigt ebenfalls ein Verfahren zur Bildqualitätsoptimierung bei gemeinsam übertragenen Videoströmen. Dabei wird ebenfalls look-ahead Processing eingesetzt.

Das Dokument US 2002/094031 A1 zeigt eine Bildqualitätsoptimierung gemeinsam übertragene Videodatenströme. Auch hier wird ein look-ahead processing eingesetzt.

Das Dokument Limin Wang et al: "Bit Allocation and Constraints for Joint Coding of Multiple Video Programs" IEEE TRANSACTIONS ON CIRCUITS AND SYSTEMS FOR VIDEO TECHNOLOGY, IEEE SERVICE CENTER, PISCATAWAY, NJ, US, Bd. 9, Nr. 6, 1. September 1999, ISSN: 1051-8215, zeigt ebenfalls eine Bildqualitätsoptimierung bei gemeinsam übertragenen Videoströmen. Dabei wird die Optimierung basierend auf einer Quellmaterialkomplexität durchgeführt.

Das Dokument US 2005/010960 A1 zeigt ebenfalls eine Bildqualitätsoptimierung gemeinsam übertragener Videoströme. Hier erfolgt die Optimierung anhand einer Kodierungsschwierigkeit.

Das Dokument WO 2011/075160 A1 zeigt ebenfalls eine Bildqualitätsoptimierung bei gemeinsam übertragenen Videodatenströmen. Hier erfolgt die Optimierung anhand eines look-ahead Processing.

Die Aufgabe wird durch ein erfindungsgemäßes Verfahren mit den Merkmalen des Patentanspruchs 1 und durch eine erfindungsgemäße Vorrichtung mit den Merkmalen des Patentanspruchs 10 gelöst. Vorteilhafte technische Erweiterungen sind in den jeweils abhängigen Patentansprüchen aufgeführt. Patentanspruch 11 bezieht sich auf ein entsprechendes Computerprogramm und Patentanspruch 12 bezieht sich auf ein entsprechendes Computerprogramm-Produkt.

Zur Optimierung der Übertragungsqualität in möglichst allen Video-Datenströmen über einen möglichst langen Zeitraum wird anstelle der Datenrate in den komprimierten Video-Datenströmen erfindungsgemäß die Anzahl der Quantisierungsstufen pro Bildpunkt in den komprimierten Video-Datenströmen geregelt.

Das erfindungsgemäße Verfahren dient zur Erzeugung eines aus mehreren Videodatenströmen zusammengesetzten Transportdatenstroms und beinhaltet die folgenden Verfahrensschritte:

- Erfassen von mehreren Kenngrößen zur Charakterisierung des Datenvolumens der einzelnen Videodatenströme und des Transportdatenstroms über einen bestimmten Zeitraum,
- Vergleichen der erfassten Kenngrößen mit jeweils mindestens einem der jeweiligen Kenngröße zugehörigen Schwellwert, und
- Einstellen des im jeweiligen Videodatenstrom in einem Zeitrasterintervall zu übertragenden Datenvolumens in Abhängigkeit einer Schwellwertüber- und/oder -unterschreitung durch mindestens eine der erfassten Kenngrößen. Die Einstellung des im jeweiligen Videodatenstrom im Zeitrasterintervall zu übertragenden Datenvolumens erfolgt durch Einstellung der Anzahl von Quantisierungsstufen pro Bildpunkt im jeweiligen Videodatenstrom. Dabei wird bei einer festen Anzahl ($N_P$) von Bildpunkten pro Bild und bei fester Übertragungskapazität des Übertragungskanals - im Betrachtungszeitraum (T) das im Übertragungskanal übertragbare Datenvolumen ($N_K$), die Anzahl von Quantisierungsstufen pro Bildpunkt in jedem einzelnen Bild (l) eines Videodatenstroms (i) in Abhängigkeit ermittelter prozentualer Anteile ($N_{\Delta,i,i}$) von Bildpunkten mit Bildinhaltsänderungen zum vorherigen Bild gegenüber einer Gesamtzahl von Bildpunkten über alle ($N_B$) Bilder innerhalb des Betrachtungszeitraums (T) zu übertragender Bilder (I) eines Video-Datenstroms bestimmt.

Die erfindungsgemäße Vorrichtung zur Erzeugung eines aus mehreren Videodatenströmen zusammengesetzten Transportdatenstroms beinhaltet jeweils einen Quellkodierer zur Erzeugung jeweils eines komprimierten Videodatenstroms, einen Multiplexer zur Erzeugung eines Transportdatenstroms aus allen komprimierten Videodatenströmen und einen statistischen Multiplexer zur Ansteuerung der Datenkomprimierung in jedem Quellkodierer. Der statistische Multiplexer beinhaltet eine Einheit zur Einstellung der Anzahl von Quantisierungsstufen für jeden Quellkodierer. Einheiten zur Erfassung von Kenngrößen, die das Datenvolumen über einen bestimmten Zeitraum an verschiedenen Stellen der einzelnen Videodatenströme und des Transportdatenstroms kennzeichnen, sind vorgesehen. Im statistischen Multiplexer sind weiterhin Vergleicher zum Vergleichen der erfassten Kenngrößen mit jeweils einem der jeweiligen Kenngröße zugehörigen Schwellwert vorgesehen. Die Einheit zur Einstellung der Anzahl von Quantisierungsstufen für jeden Quellkodierer ist dabei ausgebildet, um bei einer festen Anzahl von Bildpunkten pro Bild und bei fester Übertragungskapazität des Übertragungskanals - im Betrachtungszeitraum das im Übertragungskanal übertragbare Datenvolumen, die Anzahl von Quantisierungsstufen pro Bildpunkt in jedem einzelnen Bild eines Videodatenstroms in Abhängigkeit ermittelter prozentualer Anteile von Bildpunkten mit Bildinhaltsänderungen zum vorherigen Bild gegenüber einer Gesamtzahl von Bildpunkten über alle Bilder innerhalb des Betrachtungszeitraums zu übertragender Bilder eines Video-Datenstroms zu bestimmen.

Für die Regelung der Quantisierung ist es vorteilhaft, eine größere Anzahl von Kenngrößen an unterschiedlichen Stellen in den einzelnen Signalpfaden - beispielsweise am Eingang und am Ausgang der einzelnen Quell-Kodierer und am

Ausgang des Multiplexers - zu berücksichtigen, die das Datenvolumen des jeweiligen Video-Datenstroms an der jeweiligen Stelle im jeweiligen Signalpfad über einen bestimmten Zeitraum charakterisieren. Die Kombination dieser größeren Anzahl von Kenngrößen ermöglicht eine bessere Schätzung des Datenübertragungsbedarfs der einzelnen Video-Datenströme über einen längeren Zeithorizont und damit eine bessere Optimierung der Übertragungsqualität und gleichzeitig auch eine bessere Ausnutzung der vorhandenen Übertragungskapazität des Übertragungskanals, als dies nach dem Stand der Technik möglich ist.

Eine erste Kenngröße wird bevorzugt jeweils am Eingang jedes Quell-Kodierers im Rahmen einer Voranalyse der Bildinhalte einer Anzahl von aufeinander folgenden Bildern bestimmt. Hierbei werden auftretende Unterschiede zwischen identischen Bildpunkten von jeweils aufeinander folgenden Bildern in einem bestimmten Zeitraum identifiziert, die ein Maß für das in diesem bestimmten Zeitraum zu übertragende Datenvolumen darstellen. Diese identifizierten Unterschiede resultieren nach der Komprimierung des nicht komprimierten Video-Datenstroms in einem erhöhten Datenvolumen des zugehörigen komprimierten Video-Datenstroms. Somit ergibt sich die Höhe dieser ersten Kenngröße aus der Anzahl von identifizierten Unterschieden in identischen Bildpunkten zwischen jeweils aufeinander folgenden Bildern.

Eine zweite Kenngröße, die ebenfalls am Eingang jedes Quell-Kodierers im Rahmen einer Kostenabschätzung ermittelt wird, stellt bevorzugt die zu erwartende Datenrate des jeweiligen komprimierten Video-Datenstroms in einem bestimmten Zeitraum dar und ergibt sich aus dem verwendeten Quell-Kodierungsverfahrens und den Bildinhalten der zu übertragenden Bilder in diesem bestimmten Zeitraum.

Eine dritte Kenngröße, die jeweils am Ausgang des jeweiligen Quell-Kodierers ermittelt wird, stellt bevorzugt die im aktuellen Zeitpunkt vom jeweiligen Quell-Kodierer erzeugte Datenrate des jeweiligen komprimierten Video-Datenstroms dar und ergibt sich aus dem vom jeweiligen Quell-Kodierer verwendeten QuellKodierungsverfahren und den Bildinhalten der im aktuellen Zeitpunkt vom jeweiligen Quell-Kodierer verarbeiteten Folge von aufeinander folgenden Bildern.

Eine vierte Kenngröße, die ebenfalls am Ausgang des jeweiligen Quell-Kodierers ermittelt wird, ergibt sich vorzugsweise aus dem aktuellen Pufferfüllstand des für den jeweiligen Quell-Kodierer verwendeten Referenz-Modells. Dieser Pufferfüllstand des verwendeten Referenz-Modells stellt näherungsweise ein Maß für das im jeweiligen Quell-Kodierer im aktuellen Zeitpunkt zwischengespeicherte Datenvolumen dar.

Eine fünfte Kenngröße, die am Ausgang des Multiplexers ermittelt wird, stellt bevorzugt die im aktuellen Zeitpunkt vom Multiplexer erzeugte Datenrate des aus allen

komprimierten Video-Datenströmen zusammengesetzten Transportdatenstroms dar und ergibt sich aus den im aktuellen Zeitpunkt vorliegenden Datenraten der einzelnen komprimierten Video-Datenströmen.

Eine sechste Kenngröße, die ebenfalls am Ausgang des Multiplexers ermittelt wird, ergibt sich vorzugsweise aus dem aktuellen Pufferfüllstand des Referenzmodells, der ein Maß für das im Multiplexer für den jeweiligen Video-Datenstrom zwischengespeicherte und in den zu erzeugenden Transportdatenstrom einzufügenden Datenvolumen darstellt.

Die Anzahl von Quantisierungsstufen pro Bildpunkt, die in möglichst allen Quell-Kodierern über einen möglichst langen Zeitraum verwendet wird, wird vorzugsweise in Abhängigkeit der in den einzelnen Zeitpunkten eines bestimmten vom statistischen Multiplexer betrachteten Zeitraums in den einzelnen Quell-Kodieren jeweils verarbeiteten Datenvolumina ermittelt. Durch Mittelung der jeweils im betrachteten Zeitraum verarbeiteten und von der

Anzahl von Quantisierungsstufen pro Bildpunkt abhängigen Datenvolumina wird eine optimale Anzahl von Quantisierungsstufen pro Bildpunkt ermittelt, die die vorhandene Übertragungskapazität des Übertragungskanals optimal ausnutzt.

Diese optimale Anzahl von Quantisierungsstufen pro Bildpunkt wird vorzugsweise für möglichst alle Quell-Kodierer solange beibehalten, bis eine festgelegte Kenngröße oder eine Kombination von mehreren festgelegten Kenngrößen jeweils einen zugehörigen oberen Schwellwert überschreitet und/oder einen zugehörigen unteren Schwellwert unterschreitet und darauf aufbauend eine Optimierungs-Strategie eine Änderung der Anzahl von Quantisierungsstufen pro Bildpunkt initiiert.

Wird einem oder mehreren komprimierten Video-Datenströmen zeitweise jeweils eine höhere Übertragungsqualität zugewiesen, so wird die Anzahl von Quantisierungsstufen pro Bildpunkt in den zugehörigen Quell-Kodierern bevorzugt zeitweise entsprechend erhöht, während die Anzahl von Quantisierungsstufen pro Bildpunkt in den übrigen Quell-Kodierern zeitweise entsprechend reduziert wird.

Ein Ausführungsbeispiel des erfindungsgemäßen Verfahrens und der erfindungsgemäßen Vorrichtung werden im Folgenden anhand der Zeichnung im Detail beispielhaft erläutert. Die Figuren der Zeichnung zeigen:

Fig. 1    ein Blockdiagramm einer Vorrichtung zur Erzeugung eines aus mehreren Video-Datenströmen zusammengesetzten Transportdatenstroms,

Fig. 2    ein Ausführungsbeispiel eines Blockdiagramms einer erfindungsgemäßen Vorrichtung zur Erzeugung eines aus mehreren Video-Datenströmen zusammengesetzten Transportdatenstroms,

Fig. 3    ein Ausführungsbeispiel eines Zustandsdiagramms einer erfindungsgemäßen Vorrichtung zur Erzeugung eines aus mehreren Video-Datenströmen zusammengesetzten Transportdatenstroms und

Fig. 4    ein Ausführungsbeispiel eines Flussdiagramms eines erfindungsgemäßen Verfahrens zur Erzeugung eines aus mehreren Video-Datenströmen zusammengesetzten Transportdatenstroms.

Bevor das Ausführungsbeispiel des erfindungsgemäßen Verfahrens und der erfindungsgemäßen Vorrichtung zur Erzeugung eines aus mehreren-Datenströmen zusammengesetzten Transportdatenstroms im Detail erläutert werden, werden im Folgenden die für das Verständnis des Erfindungsgedankens wesentlichen Grundlagen vorgestellt:

Um eine gegebene Übertragungskapazität eines Übertragungskanals optimal mit Daten von mehreren in einem gemeinsamen Transportdatenstrom übertragenen Video-Datenströmen auszulasten, sind die in einem Betrachtungs-Zeitraum $T$ in den insgesamt $n$ Video-Datenströmen jeweils zu übertragenden komprimierten Datenvolumina $N_i$ auf das im selben Betrachtungs-Zeitraum $T$ vom Übertragungskanal aufgrund seiner Übertragungskapazität übertragbare Datenvolumen $N_K$ optimal aufzuteilen. Bei der Optimierung ist das in Gleichung (1) dargestellte Optimierungs-Kriterium einzuhalten.

$$\sum_{i=1}^{n} \frac{N_i}{T} = \frac{N_K}{T} \tag{1}$$

Das vom jeweiligen Video-Datenstrom $i$ im Betrachtungs-Zeitraum $T$ zu übertragende Datenvolumen $N_i$ ergibt sich gemäß Gleichung (2) aus der Summation der im Zeitraster $T'$ einstellbaren Datenraten $D_i(j \cdot T')$ des jeweiligen Video-Datenstroms $i$. Der Betrachtungs-Zeitraum $T$ ist hierbei typischerweise ein ganzzahliges Vielfaches des Zeitrasters $T'$, in dem die Datenrate $D_i(j \cdot T')$ des jeweiligen Video-Datenstroms $i$ verstellbar ist.

$$N_i = \sum_{j=1}^{\frac{T}{T'}} D_i(j \cdot T') \cdot T' \tag{2}$$

Für die Bestimmung des Datenvolumens $N_i$ eines Video-Datenstroms $i$ in einem Betrachtungszeitraum $T$ wird eine Übertragung von so genannten Bildergruppen (Group-of-Pictures (GOP)) vorausgesetzt, die aus Intra-Bildern (I-Bildern) mit der vollständigen Bildinformation in allen Bildpunkten des Bildes, P-Bildern mit den Änderungen der Bildinhalte aller Bildpunkte des Bildes zu den Bildinhalten der korrespondierenden Bildpunkte im vorherigen Bild und aus B-Bildern mit den Änderungen der Bildinhalten aller Bildpunkte des Bildes zu den Bildinhalten der korrespondierenden Bildpunkte im vorherigen und gleichzeitig nachfolgenden Bild bestehen. Der Einfachheit halber werden in der folgenden Betrachtung nur die zu übertragenden Daten von P-Bildern berücksichtigt, die in Summe den größten Anteil an Bildinformationen innerhalb einer Bildergruppe aufweisen.

Das Datenvolumen $N_i$ eines Video-Datenstroms $i$ in einem Betrachtungszeitraum $T$ ist somit gemäß der Näherung (3) näherungsweise von der Anzahl $N_Q$ von Quantisierungsstufen pro Transformationskoeffizienten, der Anzahl $N_P$ von Bildpunkten pro Bild und dem prozentualen Anteil $N_{\Delta_{i,l}}$ von Bildpunkten mit Bildinhaltsänderungen zum vorherigen Bild gegenüber der Gesamtanzahl von Bildpunkten über alle $N_B$ innerhalb des Betrachtungszeitraums $T$ zu übertragende Bilder $l$ eines Video-Datenstroms $i$ abhängig.

$$N_i \propto N_Q \cdot N_P \cdot \sum_{l=1}^{N_B} N_{\Delta_{i,l}} \tag{3}$$

Bei einem bei der Anmelderin bisher intern verwendeten statistischen Multiplexer werden gemäß der Beziehung (4A) die Datenraten $D_i(j \cdot T')$ sämtlicher Video-Datenströme in den einzelnen Zeitrasterintervallen $T'$ des Betrachtungszeitraums $T$ minimiert, um Übertragungskapazität für zusätzliche Datenströme innerhalb der Übertragungskapazität des Übertragungskanals zu gewinnen und damit eine optimierte Übertragungseffizienz des Übertragungskanals zu erzielen. Hierzu werden bei einer fester Anzahl $N_P$ von Bildpunkten pro Bild und bei einer fixierter Anzahl $N_Q$ von Quantisierungsstufen pro Bildpunkt die zu den einzelnen Video-Datenströmen $i$ jeweils gehörigen Datenraten $D_i(j \cdot T')$ sämtlicher Video-Datenströme in allen Zeitrasterintervallen $T'$ des Betrachtungszeitraums $T$ gemäß der Beziehung (4B) in Abhängigkeit der ermittelten prozentualen Anteile $N_{\Delta_{i,l}}$ von Bildpunkten mit Bildinhaltsänderungen zum vorherigen Bild minimiert.

$$Min \left\{ \sum_{i=1}^{n} \sum_{j=1}^{\frac{T}{T'}} D_i(j \cdot T') \cdot T' \right\} \tag{4A}$$

$$\sum_{i=1}^{n} \sum_{j=1}^{\frac{T}{T'}} D_i(j \cdot T') \cdot T' \propto N_Q \cdot N_P \cdot \sum_{i=1}^{n} \sum_{l=1}^{N_B} N_{\Delta_{i,l}} \tag{4B}$$

Zur Vereinfachung des Optimierungsproblems werden bei der Bestimmung der Datenraten $D_i(j \cdot T')$ sämtlicher Video-Datenströme gemäß der Beziehungen (5A) und (5B) lediglich zwei aufeinander folgende Zeitrasterintervalle $T'$ betrachtet. Die dabei benutzte Größe $N_{B'}$ stellt dabei die Anzahl von Bildern dar, die innerhalb von zwei aufeinander folgenden Zeitrasterintervallen $T'$ übertragen werden.

$$Min\left\{\sum_{i=1}^{n}\sum_{j=1}^{2}D_i(j\cdot T')\cdot T'\right\} \qquad (5A)$$

$$\sum_{i=1}^{n}\sum_{j=1}^{2}D_i(j\cdot T')\cdot T' \propto N_Q \cdot N_P \cdot \sum_{i=1}^{n}\sum_{l=1}^{N_B}N_{\Delta_{i,l}} \qquad (5B)$$

Beim erfindungsgemäßen statistischen Multiplexer werden die Datenraten $D_i(j\cdot T')$ sämtlicher Video-Datenströme in allen Zeitrasterintervallen $T'$ des Betrachtungszeitraums $T$ nicht wie bisher minimiert, um zusätzliche Übertragungskapazitäten für weitere Datenströme zu erzielen, sondern die im Übertragungskanal vorhandene Übertragungskapazität wird im Hinblick auf eine Optimierung der Übertragungsqualität in möglichst vielen Video-Datenströmen über einen möglichst langen Zeitraum genutzt.

Hierzu werden bei einer festen Anzahl $N_P$ von Bildpunkten pro Bild und bei fester Übertragungskapazität des Übertragungskanals - im Betrachtungszeitintervall $T$ das im Übertragungskanal übertragbare Datenvolumen $N_K$ - die Anzahl $N_{Q_{i,l}}$ von Quantisierungsstufen pro Bildpunkt in jedem einzelnen Bild $l$ eines Video-Datenstroms $i$ gemäß der Beziehung (6) in Abhängigkeit der ermittelten prozentualen Anteile $N_{\Delta_{i,l}}$ von Bildpunkten mit Bildinhaltsänderungen zum vorherigen Bild gegenüber der Gesamtanzahl von Bildpunkten über alle $N_B$ innerhalb des Betrachtungszeitraums $T$ zu übertragende Bilder $l$ eines Video-Datenstroms $i$ bestimmt.

$$\frac{N_P \cdot \sum_{i=1}^{n}\sum_{l=1}^{N_B}N_{Q_{i,l}}\cdot N_{\Delta_{i,l}}}{T} \leq \frac{N_K}{T} \qquad (6)$$

Im Gegensatz zum bisherigen Vorgehen, bei dem zur Vereinfachung des Optimierungsproblems der Betrachtungszeitraum auf zwei aufeinander folgende Zeitrasterintervalle $T'$ minimiert wurde, wird beim erfindungsgemäßen statistischen Multiplexer ein größtmöglicher Betrachtungszeitraum $T$ angestrebt, um eine optimale Übertragungsqualität in möglichst allen Video-Datenströmen über einen möglichst weiten Zeitraum zu erzielen.

Hierzu werden nicht nur

- die vom jeweiligen Quell-Kodierer $1_1, 1_2,...,1_n$ im aktuellen Zeitraum erzeugte Datenrate, die näherungsweise proportional zu den Bildinhaltsänderungen zwischen jeweils aufeinander folgenden Bildern in einem aktuell vom jeweiligen Quell-Kodierer $1_1, 1_2,...,1_n$ verarbeiteten Zeitintervall sind, und

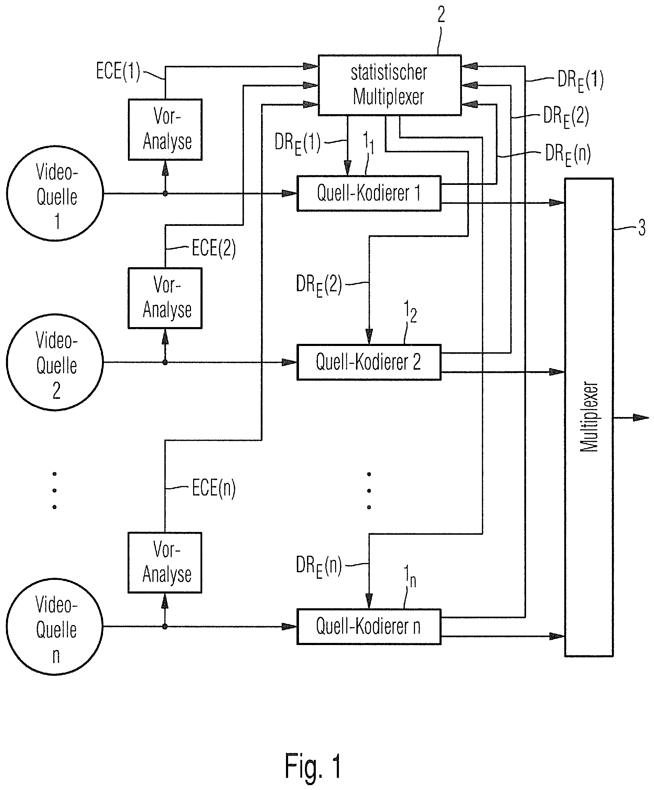

- die erwartete Komplexität von zu übertragenden Datenvolumina, die näherungsweise zu den Bildinhaltsänderungen zwischen jeweils aufeinander folgenden Bildern im nächstfolgenden vom jeweiligen Quell-Kodierer $1_1, 1_2,...,1_n$ verarbeiteten Zeitintervall sind,
  wie in einem statistischen Multiplexer 2 gemäß Fig. 1 berücksichtigt, sondern zusätzlich

- die erwartete Datenrate von zu übertragenden Datenvolumina, die näherungsweise zu den Bildinhaltsänderungen zwischen jeweils aufeinander folgenden Bildern im nächstfolgenden vom jeweiligen Quell-Kodierer $1_1, 1_2,...,1_n$ verarbeiteten Zeitintervall sind,

- die Datenrate des aus mehreren Video-Datenströmen zusammengesetzten Transportdatenstroms am Ausgang eines Multiplexers 3, die aufgrund eines komplexeren Multiplex-Algorithmuses in einem bestimmten Zeitintervall des Transportdatenstroms komprimierte Datenvolumina der einzelnen Quell-Kodierer $1_1, 1_2,...,1_n$ aus unterschiedlichen Zeitintervallen, insbesondere aus mehr als zwei Zeitintervallen, enthält,

- der Pufferfüllstand des in den einzelnen Quell-Kodierern $1_1, 1_2,...,1_n$ verwendeten Referenzmodells, der ein Maß für die im jeweiligen Quell-Kodierer $1_1, 1_2,...,1_n$ zwischengespeicherten Datenvolumina aus zurückliegenden Zeitintervallen, insbesondere auch aus Zeitintervallen, die weit zurückliegen, darstellt, und

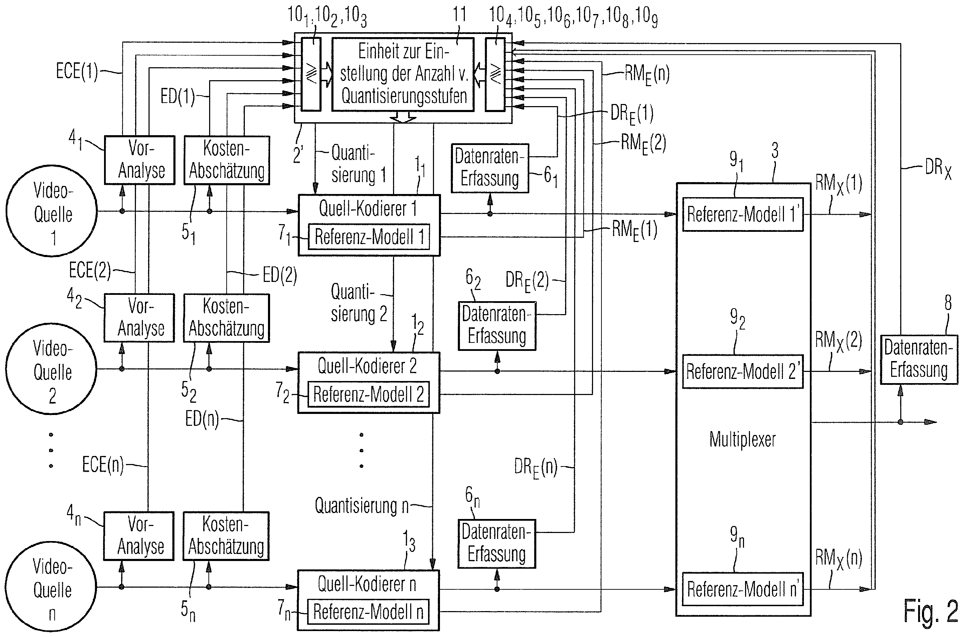

- die Pufferfüllstände der im Multiplexer 3 für die einzelnen in den jeweiligen Quell-Kodierern $1_1, 1_2,...,1_n$ komprimierten Video-Datenströme verwendeten Referenzmodelle, die jeweils ein Maß für die im Multiplexer 3 zwischengespeicherten und noch nicht in den Transportdatenstrom eingefügten Datenvolumina von in den jeweiligen Quell-Kodierern $1_1,1_2,...,1_n$ komprimierten Video-Datenströmen aus zurückliegenden Zeitintervallen, insbesondere auch aus Zeitintervallen, die weit zurückliegen, darstellen,

in einem erfindungsgemäßen statistischen Multiplexer 2' gemäß Fig. 2 verwendet. Es können entweder alle oder einzelne oder Unterkombinationen der vorgenannten Maßnahmen erfindungsgemäß durchgeführt werden.

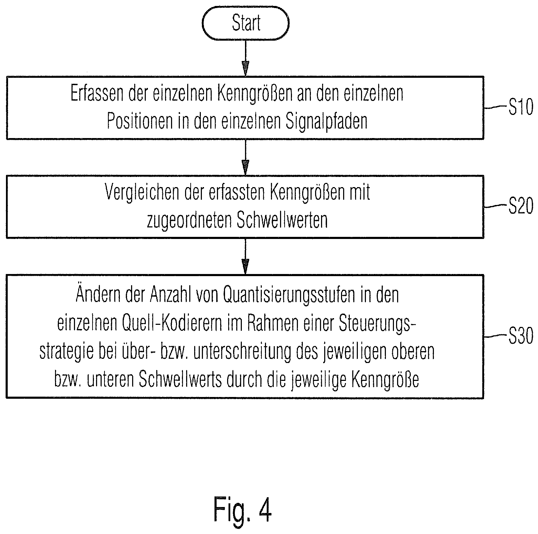

Auf der Basis dieser Grundlagen-Kenntnisse werden im Folgenden die erfindungsgemäße Vorrichtung anhand des Blockdiagramms die Fig. 2 und das erfindungsgemäße Verfahren anhand des Flussdiagramms in Fig. 4 im Detail erläutert:

Im ersten Verfahrensschritt S10 des erfindungsgemäßen Verfahrens werden verschiedene Kenngrößen erfasst, die das in einem bestimmten Zeitintervall zu übertragende Datenvolumen eines zu komprimierenden bzw. eines bereits komprimierten Video-Datenstroms bzw. das in einem bestimmten Zeitrasterintervall $T'$ zu übertragende Datenvolumen eines aus mehreren komprimierten Video-Datenströmen zusammengesetzten Transportdatenstroms charakterisieren.

Folgende Kenngrößen werden bevorzugt hierzu erfasst:

- eine erste Kenngröße ECE(1), ECE(2),...,ECE(n), die die erwartete Komplexität eines in einem Zeitrasterintervall $T'$ zu übertragenden Datenvolumens eines komprimierten Video-Datenstroms 1,2,...,n kennzeichnet; diese erste Kenngröße ECE(1), ECE(2),...,ECE(n) wird jeweils in einer zum jeweiligen Datenstrom 1,2,...,n gehörigen Einheit zur Vor-Analyse $4_1,4_2,...,4_n$ aus den Bildinhalten von in einem bestimmten Zeitrasterintervall $T'$ zu übertragenden Bildern ermittelt, indem Bildinhaltsänderungen in Bildpunkten zwischen jeweils aufeinander folgenden Bildern ermittelt werden.

- eine zweite Kenngröße ED(1),ED(2),...,ED(n), die die erwartete Datenrate eines in einem Zeitrasterintervall $T'$ zu übertragenden Datenvolumens eines komprimierten Video-Datenstroms 1,2,...,n kennzeichnet; diese zweite Kenngröße ED(1),ED(2),...,ED(n) wird jeweils in einer zum jeweiligen Datenstrom 1,2,...,n gehörigen Einheit zu Kostenabschätzung $5_1,5_2,...,5_n$ aus den Bildinhalten von in einem bestimmten Zeitrasterintervall $T'$ zu übertragenden Bildern und den in den jeweiligen Quell-Kodierern $1_1,1_2,...,1_n$ verwendeten Quellkodierungsverfahren ermittelt.

- eine dritte Kenngröße DRE(1),DRE(2),...,DRE(n), die die im jeweiligen Quell-Kodierer $1_1,1_2,...,1_n$ in den einzelnen Zeitrasterintervallen $T'$ erzeugte jeweils aktuelle Datenrate des jeweiligen komprimierten Video-Datenstroms kennzeichnet und die in einer zum jeweiligen komprimierten Video-Datenstrom gehörigen Einheit zur Datenratenerfassung $6_1,6_2,...,6_n$ gemessen wird.

- eine vierte Kenngröße RME(1),RME(2),..,RME(n), die den Pufferfüllstand eines zum jeweiligen Quell-Kodierer $1_1,1_2,...,1_n$ gehörigen Referenzmodells $7_1,7_2,..,7_n$ in den einzelnen Zeitrasterintervallen $T'$ kennzeichnet. Diese Pufferfüllstande modellieren das Maß an zwischengespeicherten Datenvolumena eines jeweiligen Video-Datenstroms 1,2,...,n und schwanken im korrekten Betrieb des jeweiligen Quell-Kodierers $1_1,1_2,...,1_n$ zwischen einem oberen Schwellwert, der einen Pufferüberlauf kennzeichnet, und einem unteren Schwellwert, der einen Leerlauf des Puffers signalisiert. Für die Video-Übertragungsstandards H.262, H.263 und H.264 sind zur Modellierung der Puffer der <u>C</u>oded/<u>D</u>ecoded-<u>P</u>icture-<u>B</u>uffer (CPB/DPB) der Standards <u>S</u>ystem-<u>T</u>arget-<u>D</u>ecoder (STD), <u>H</u>ypothetical-<u>R</u>eference-<u>D</u>ecoder (HRD) und <u>V</u>ideo-<u>B</u>uffering-<u>V</u>erifier (VBV) vorgesehen. Die Einhaltung der in den Standards festgelegten Anforderungen für die Pufferspeicher bei der Dimensionierung der unkomprimierten Video-Datenströme und der komprimierten Video-Datenströme in den einzelnen Quell-Kodierern $1_1,1_2,...,1_n$ gewährleistet einen korrekten und lückenfreien Datenstrom am Eingang und Ausgang des jeweiligen Quell-Kodierers $1_1,1_2,...,1_n$.

- eine fünfte Kenngröße DRX, die die Datenrate des aus mehreren kompetenten Video-Datenströme zusammengesetzten Transportdatenstroms in den einzelnen Zeitrasterintervallen $T'$ kennzeichnet und in einer Einheit zur Datenratenerfassung 8 gemessen wird.

- eine sechste Kenngröße RMX(1),RMX(2),...,RMX(n), die den Pufferfüllstand eines zum jeweiligen komprimierten Video-Datenstrom 1,2,...,n gehörigen, im Multiplexer 3 zwischengespeicherten und noch nicht in den Transportdatenstrom eingefügten Datenvolumen in einem zum jeweiligen komprimierten Video-Datenstrom 1,2,..., in gehörigen Referenzmodell $9_1,9_2,...,9_n$ in den einzelnen Zeitrasterintervallen $T'$ kennzeichnet.

Erfindungsgemäß können entweder alle vorstehend genannten Kenngrößen, einzelne genannten Kenngrößen oder Unterkombinationen der genannten Kenngrößen zum Einsatz kommen. Von der Erfindung ist auch die Verwendung anderer oder weiterer, hier noch nicht erwähnter Kenngrößen mit abgedeckt, die das Datenvolumen in einem bestimmten Datenstrom in einem bestimmten Zeitrasterintervall $T'$ charakterisieren.

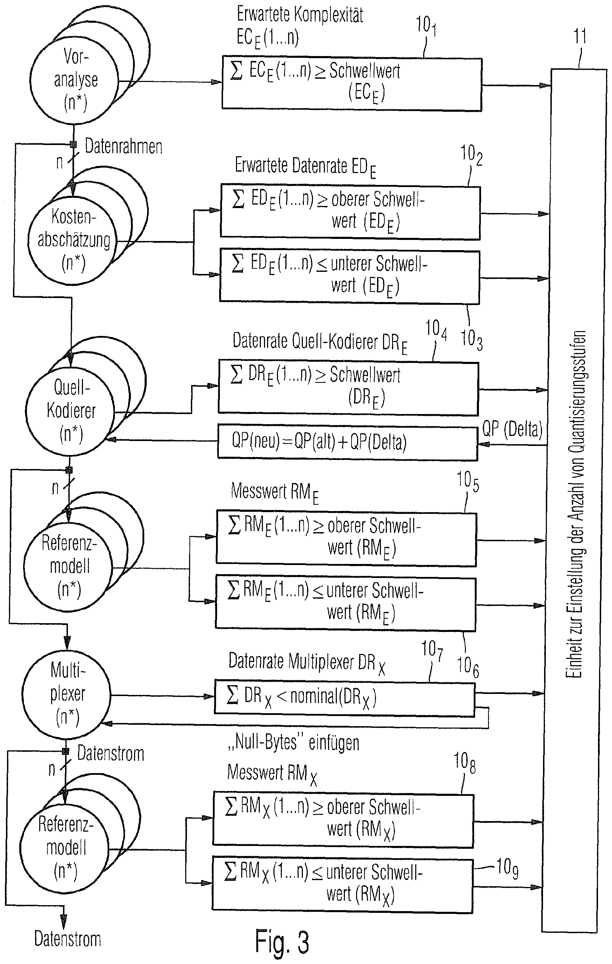

Im nächsten Verfahrensschritt S20 werden die einzelnen Kenngrößen ECE(1),ECE(2),...,ECE(n), ED(1),ED(2),..., ED(n),DRE(1),DRE(2),...,DRE(n),RME(1),RME(2),...,RME(n),DRX und RMX(1),RMX(2),...,RMX(n), die in den einzelnen Einheiten zur Erfassung von Kenngrößen - d.h. in den Einheiten zur Vor-Analyse $4_1,4_2,...,4_n$, in den Einheiten zur Kostenabschätzung $5_1,5_2,...,5_n$, in den Einheiten zur Datenratenerfassung $6_1,6_2,...,6_n$, in den Referenz-modellen $7_1,7_2,..,7_n$, in der Einheit zur Datenratenerfassung 8 und in den Referenzmodellen $9_1,9_2,...,9_n$ - ermittelt werden, in jeweils zugeordneten Vergleichern $10_1, 10_2, 10_3, 10_4, 10_5, 10_6, 10_7, 10_8$ und $10_9$ innerhalb der erfindungsgemäßen statistischen Multiplexer 2' mit jeweils zugeordneten Schwellwerten - d.h. mit den Schwellwerten Schwellwert(ECE), oberer Schwellwert(EDE), unterer Schwellwert(EDE), Schwellwert(DRE), oberer Schwellwert(RME), unterer Schwellwert(RME), Schwellwert(DRX), oberer Schwellwert(RMX), unterer Schwellwert(RMX) gemäß Fig. 3 - verglichen.

Im nächsten und abschließenden Verfahrensschritt S30 werden in Abhängigkeit der Vergleichsergebnisse in den einzelnen Vergleichern $10_1, 10_2, 10_3, 10_4, 10_5, 10_6, 10_7, 10_8$ und $10_9$ in einer Einheit 11 zur Einstellung der Anzahl von Quantisierungsstufen die Anzahl $N_{Q_{i,l}}$ von Quantisierungsstufen pro Bildpunkt bei der Komprimierung von Bilddaten von Bildern innerhalb eines Zeitrasterintervalls $T'$ in einem Video-Datenstrom $i$ gegenüber der Anzahl $N_{Q_{i,l}}$ von Quantisierungsstufen pro Bildpunkt bei der Komprimierung von Bilddaten von Bildern innerhalb des vorherigen Zeitrasterintervalls $T'$ in einem Video-Datenstrom $i$ entweder geändert oder beibehalten.

Hierbei wird zur Verwirklichung einer möglichst hohen Übertragungsqualität in möglichst allen komprimierten Video-Datenströmen über einen möglichst langen Zeitraum eine möglichst hohe und gleichbleibend konstante Anzahl $N_{Q_{i,l}}$ von Quantisierungsstufen pro Bildpunkt in den Bildern über möglichst viele Zeitintervalle $T'$ in möglichst vielen komprimierten Video-Datenströmen angestrebt.

Es erfolgt prinzipiell keine Änderung der Anzahl $N_{Q_{i,l}}$ von Quantisierungsstufen pro Bildpunkt zwischen jeweils aufeinander folgenden Zeitrasterintervallen $T'$, wenn kein Überschreiten eines Schwellwerts (ECE), eines oberen Schwellwerts (EDE), eines Schwellwerts (DRE), eines oberen Schwellwerts (RME), eines Schwellwerts (DRX), eines oberen Schwellwerts (RMX) und kein Unterschreiten eines unteren Schwellwerts (EDE), eines unteren Schwellwerts (RME), eines unteren Schwellwerts (RMX) vorliegt.

Eine Änderung der Anzahl $N_{Q_{i,l}}$ von Quantisierungsstufen pro Bildpunkt zwischen jeweils aufeinander folgenden Zeitrasterintervallen $T'$ im Fall des Überschreitens eines Schwellwerts (ECE), eines oberen Schwellwerts (EDE), eines Schwellwerts (DRE), eines oberen Schwellwerts (RME), eines Schwellwerts (DRX), eines oberen Schwellwerts (RMX) und/oder eines Unterschreitens eines unteren Schwellwerts (EDE), eines unteren Schwellwerts (RME), eines unteren Schwellwerts (RMX) wird bevorzugt bei Vorliegen von bestimmten zusätzlichen Bedingungen vermieden.

Die Identifizierung dieser zusätzlichen Bedingungen erfolgt durch eine Optimierungsstrategie, die in der Einheit 11 zur Einstellung der Anzahl von Quantisierungsstufen implementiert ist. Wie diese Optimierungsstrategie im Einzelnen strukturiert ist, wird an dieser Stelle nicht näher erläutert. Vielmehr werden beispielhaft zwei zusätzliche Bedingungen vorgestellt, die im Rahmen diese Optimierungsstrategie identifiziert werden und zu keiner Änderung der Anzahl $N_{Q_{i,l}}$ von Quantisierungsstufen pro Bildpunkt zwischen jeweils aufeinander folgenden Zeitrasterintervallen $T'$ führen.

1. zusätzliche Bedingung:

Überschreitet beispielsweise der Pufferfüllstand RME(1) des zum Quell-Kodierer $1_1$ gehörigen Referenzmodells den festgelegten oberen Schwellwert RME, so kommt es zu keiner Reduzierung der Anzahl $N_{Q_1,l}$ von Quantisierungsstufen pro Bildpunkt, wenn die erwartete Datenrate EDE(1) des zugehörigen komprimierten Video-Datenstroms 1 einen abfallenden Verlauf aufweist.

2. zusätzliche Bedingung:

Unterschreitet beispielsweise der Pufferfüllstand RMX(2) des zum komprimierten Video-Datenstrom 2 gehörigen Referenzmodells im Multiplexer 3 den festgelegten unteren Schwellwert RMX, so wird keine Erhöhung der Anzahl $N_{Q_2,l}$ von Quantisierungsstufen pro Bildpunkt angestrebt, wenn die erwartete Komplexität ECE(2) des komprimierten Video-Datenstroms 2 stark zunimmt.

Diese optionalen zusätzlichen Bedingungen können entweder einzeln, in Kombination oder auch gar nicht zum Einsatz kommen.

In einer ersten Ausführungsform der Erfindung wird für alle $n$ komprimierten Video-Datenströmen jeweils eine identische Übertragungsqualität angestrebt. Somit ist die Anzahl $N_{Q_2,l}$ von Quantisierungsstufen pro Transformationskoeffizienten in den Datenvolumina aller komprimierten Video-Datenströme typischerweise identisch.

In einer zweiten Ausführungsform der Erfindung wird einzelnen komprimierten Video-Datenströmen zeitweise oder ständig eine erhöhte Übertragungsqualität zugewiesen. Die Anzahl $N_{Q2,I}$ von Quantisierungsstufen pro Bildpunkt in den Datenvolumina dieser komprimierten Video-Datenströme wird somit zeitweise oder ständig erhöht, während die Anzahl $N_{Q2,I}$ von Quantisierungsstufen pro Bildpunkt in den Datenvolumina der komprimierten Video-Datenströme entsprechend zeitweise oder ständig reduziert wird.

Das erfindungsgemäße Verfahren und die erfindungsgemäße Vorrichtung sind nicht auf die dargestellte Ausführungsform beschränkt. Von der Erfindung sind insbesondere alle möglichen Kombinationen aller in den Patentansprüchen beanspruchten Merkmale, aller in der Beschreibung offenbarten Merkmale und aller in den Figuren der Zeichnung dargestellt die Merkmale mit abgedeckt.

## Patentansprüche

1.  Verfahren zur Erzeugung eines aus mehreren Videodatenströmen zusammengesetzten Transportdatenstroms mit folgenden Verfahrensschritten:

    • Erfassen von mehreren Kenngrößen zur Charakterisierung des Datenvolumens der einzelnen Videodatenströme und des Transportdatenstroms über einen bestimmten Zeitraum ($T$),
    • Vergleichen der erfassten Kenngrößen mit jeweils mindestens einem der jeweiligen Kenngröße zugehörigen Schwellwert, und
    • Einstellen des im jeweiligen Videodatenstrom ($i$) in einem Zeitrasterintervall zu übertragenden Datenvolumens in Abhängigkeit einer Schwellwertüber- und/oder - unterschreitung durch mindestens eine der erfassten Kenngrößen,

    wobei die Einstellung des im jeweiligen Videodatenstrom ($i$) im Zeitrasterintervall zu übertragenden Datenvolumens durch Einstellung der Anzahl von Quantisierungsstufen $N_{Qi,I}$ pro Bildpunkt im jeweiligen Videodatenstrom ($i$) erfolgt, und wobei bei einer festen Anzahl ($N_P$) von Bildpunkten pro Bild und bei fester Übertragungskapazität des Übertragungskanals im Betrachtungszeitraum ($T$) das im Übertragungskanal übertragbare Datenvolumen ($N_K$), die Anzahl von Quantisierungsstufen pro Bildpunkt in jedem einzelnen Bild ($I$) eines Videodatenstroms ($i$) in Abhängigkeit ermittelter prozentualer Anteile ($N_{\Delta,i,I}$) von Bildpunkten mit Bildinhaltsänderungen zum vorherigen Bild gegenüber einer Gesamtzahl von Bildpunkten über alle ($N_B$) Bilder innerhalb des Betrachtungszeitraums ($T$) zu übertragender Bilder ($I$) eines Video-Datenstroms bestimmt werden.

2.  Verfahren nach Anspruch 1,
    **dadurch gekennzeichnet,**
    **dass** eine erste Kenngröße (ECE(1), ECE(2) , ..., ECE(n)) in jedem einzelnen Videodatenstrom vor einer Datenkompression in einer Voranalyse der Bildinhalte für eine Anzahl von aufeinander folgenden Bildern ermittelt wird, die dem in einem Zeitraum ($T$) erwartete Datenvolumen des jeweiligen Videodatenstroms nach der Datenkompression entspricht und die von der Anzahl von Unterschieden in den einzelnen Bildpunkten zwischen jeweils aufeinander folgenden Bildern abhängt.

3.  Verfahren nach einem der Ansprüche 1 oder 2,
    **dadurch gekennzeichnet,**
    **dass** eine zweite Kenngröße (ED(1), ED(2),..., ED(n)) im jeweiligen Videodatenstrom vor einer Datenkompression ermittelt wird, die der erwartete Datenrate des Videodatenstroms nach der Datenkompression entspricht und die von den Bildinhalten in aufeinander folgenden Bildern und vom verwendeten Quellkodierverfahren abhängt.

4.  Verfahren nach einem der Ansprüche 1 bis 3,
    **dadurch gekennzeichnet,**
    **dass** eine dritte Kenngröße (DRE(1), DRE(2),..., DRE(n)) im jeweiligen Videodatenstrom bei der Quellkodierung ermittelt wird, die der aktuelle Datenrate des Videodatenstroms nach der Datenkompression entspricht und die von den im jeweiligen Quellkodierer aktuell verarbeiteten Bildinhalten in jeweils aufeinander folgenden Bildern und vom verwendeten Quellkodierverfahren abhängt.

5.  Verfahren zur Ermittlung einer konstanten Datenrate nach einem der Ansprüche 1 bis 4,
    **dadurch gekennzeichnet,**
    **dass** eine vierte Kenngröße (RME(1), RME(2),.., RME(n)) im jeweiligen Videodatenstrom bei der Quellkodierung ermittelt wird, die dem Pufferfüllstand in einem Referenzmodell des jeweiligen Videodatenstroms nach der Datenkompression entspricht.

**6.** Verfahren nach einem der Ansprüche 1 bis 5,
**dadurch gekennzeichnet,**
**dass** eine fünfte Kenngröße (DRX) im Transportdatenstrom ermittelt wird, die der aktuellen Datenrate des von einem Multiplexer (3) erzeugten Transportdatenstroms entspricht.

**7.** Verfahren nach einem der Ansprüche 1 bis 6,
**dadurch gekennzeichnet,**
**dass** eine sechste Kenngröße (RMX(1), RMX(2),..., RMX(n)) in einem den Transportdatenstrom erzeugenden Multiplexer (3) ermittelt wird, die dem Pufferfüllstand des zum jeweiligen Videodatenstrom gehörigen Referenzmodells im Multiplexer (3) entspricht.

**8.** Verfahren nach einem der Ansprüche 1 bis 7,
**dadurch gekennzeichnet,**
**dass** eine Anzahl von Quantisierungsstufen für jeden einzelnen Quellkodierer ($1_1$, $1_2$,..., $1_n$) über einen Zeitraum als gemittelter Wert über alle in den einzelnen Zeitpunkten eines bestimmten Zeitraums ($T$) in den einzelnen Quellkodierern ($1_1$, $1_2$,..., $1_n$) jeweils zu verarbeitende Datenvolumina der Videodatenströme ermittelt wird.

**9.** Verfahren nach Anspruch 8,
**dadurch gekennzeichnet,**
**dass** bei einem oder mehreren Videodatenströmen mit jeweils einer in einem bestimmten Zeitraum erhöhten Übertragungsqualität die Anzahl von Quantisierungsstufen in den zugehörigen Quellkodierern ($1_1$,$1_2$,...,$1_n$) in dem bestimmten Zeitraum gegenüber dem gemittelten Wert erhöht ist, während die Anzahl von Quantisierungsstufen in den übrigen Quellkodierern ($1_1$, $1_2$,..., $1_n$) in dem bestimmten Zeitraum entsprechend reduziert ist.

**10.** Vorrichtung zur Erzeugung eines aus mehreren Videodatenströmen zusammengesetzten Transportdatenstroms mit jeweils einem Quellkodierer ($1_1$, $1_2$, ..., $1_n$) zur Erzeugung jeweils eines komprimierten Videodatenstroms, einem Multiplexer (3) zur Erzeugung eines Transportdatenstroms aus allen komprimierten Videodatenströmen und einem statistischen Multiplexer (2') zur Ansteuerung der Datenkomprimierung in jedem Quellkodierer ($1_1$, $1_2$,..., $1_n$), wobei der statistische Multiplexer (2') eine Einheit (11) zur Einstellung der Anzahl von Quantisierungsstufen für jeden Quellkodierer ($1_1$,$1_2$,...,$1_n$) enthält,
wobei Einheiten ($4_1$, $4_2$,..., $4_n$, $5_1$, $5_2$,..., $5_n$, $6_1$, $6_2$,..., 6n, $7_1$, $7_2$,..., $7_n$, 8, $9_1$, $9_2$,..., $9_n$) zur Erfassung von Kenngrößen, die das Datenvolumen über einen bestimmten Zeitraum an verschiedenen Stellen der einzelnen Videodatenströme und des Transportdatenstroms kennzeichnen, vorgesehen sind,
wobei im statistischen Multiplexer (2') Vergleicher ($10_1$, $10_2$, $10_3$, $10_4$, $10_5$, $10_6$, $10_7$, $10_8$, $10_9$) zum Vergleichen der erfassten Kenngrößen mit jeweils einem der jeweiligen Kenngröße zugehörigen Schwellwert vorgesehen sind, und wobei die Einheit (11) zur Einstellung der Anzahl von Quantisierungsstufen für jeden Quellkodierer ($1_1$,$1_2$,...,$1_n$) ausgebildet ist, um bei einer festen Anzahl ($N_P$) von Bildpunkten pro Bild und bei fester Übertragungskapazität des Übertragungskanals im Betrachtungszeitraum ($T$) das im Übertragungskanal übertragbare Datenvolumen ($N_K$), die Anzahl von Quantisierungsstufen ($N_{Qi,l}$) pro Bildpunkt in jedem einzelnen Bild (l) eines Videodatenstroms (i=1,2,...,n) in Abhängigkeit ermittelter prozentualer Anteile ($N_{\Delta,i,l}$) von Bildpunkten mit Bildinhaltsänderungen zum vorherigen Bild gegenüber einer Gesamtzahl von Bildpunkten über alle ($N_B$) Bilder innerhalb des Betrachtungszeitraums ($T$) zu übertragender Bilder (l) eines Video-Datenstroms zu bestimmen.

**11.** Computerprogramm mit Programmcode-Mitteln, um alle Schritte gemäß einem der Ansprüche 1 bis 9 durchführen zu können, wenn das Programm auf einem Computer oder einem digitalen Signalprozessor ausgeführt wird.

**12.** Computerprogramm-Produkt mit insbesondere auf einem maschinenlesbaren Träger gespeicherten Programmcode-Mitteln, um alle Schritte gemäß einem der Ansprüche 1 bis 9 durchführen zu können, wenn das Programm auf einem Computer oder einem digitalen Signalprozessor ausgeführt wird.

**Claims**

**1.** Method for producing a transport data stream composed of a plurality of video data streams with the following method steps:

  - acquiring a plurality of characteristic values for characterising the volume of data of the individual video data streams and the transport data stream over a particular period of time ($T$),

- comparing the acquired characteristic values with in each case at least one threshold value associated with the respective characteristic value, and
- adjusting the volume of data to be transmitted in the respective video data stream (*i*) in a time grid interval depending on an overshoot and/or undershoot of the threshold value by at least one of the acquired characteristic values,

wherein the adjusting of the volume of data to be transmitted in the respective video data stream (*i*) in the time grid interval is effected by adjusting the number of quantization stages ($N_{Qi, l}$) per picture element in the respective video data stream (*i*), and

wherein with a fixed number ($N_P$) of picture elements per image and with a fixed transmission capacity of the transmission channel in the period of time considered ($N_K$), the volume of data ($N_K$) which can be transmitted in the transmission channel, the number of quantization stages per picture element in each individual image (1) of a video data stream (i) are determined depending on the established percentage proportions ($N_{\Delta,i,l}$) of picture elements with changes in image content compared with the preceding image with respect to a total number of picture elements over all ($N_B$) of the images (1) of a video data stream to be transmitted within the period of time considered (T).

2. Method according to claim 1,
   **characterised in that**
   a first characteristic value (ECE(1), ECE(2),..., ECE(n)) is established in each individual video data stream prior to data compression in a preliminary analysis of the image contents for a number of successive images which corresponds to the volume of data of the respective video data stream after the data compression expected in a period of time (*T*) and which depends on the number of differences in the individual picture elements between successive images.

3. Method according to claim 1 or 2,
   **characterised in that**
   a second characteristic value (ED(1), ED(2),..., ED(n)) is established in the respective video data stream prior to data compression which corresponds to the expected data rate of the video data stream after the data compression and which depends on the image contents in successive images and on the source encoding method used.

4. Method according to one of claims 1 to 3,
   **characterised in that**
   a third characteristic value (DRE(1), DRE(2),..., DRE(n)) is established in the respective video data stream in the source encoding which corresponds to the current data rate of the video data stream after the data compression and which depends on the image contents currently processed in the respective source encoding unit in successive images and on the source encoding method used.

5. Method for establishing a constant data rate according to one of claims 1 to 4,
   **characterised in that**
   a fourth characteristic value (RME(1), RME(2),..., RME(n)) is established in the respective video data stream in the source encoding which corresponds to the level of the buffer in a reference model of the respective video data stream after the data compression.

6. Method according to one of claims 1 to 5,
   **characterised in that**
   a fifth characteristic value (DRX) is established in the transport data stream which corresponds to the current data rate of the transport data stream produced by a multiplexer (3).

7. Method according to one of claims 1 to 6,
   **characterised in that**
   a sixth characteristic value (RMX(1), RMX(2),..., RMX(n)) is established in a multiplexer (3) producing the transport data stream which corresponds to the level of the buffer of the reference model of the respective video data stream in the multiplexer (3).

8. Method according to one of claims 1 to 7,
   **characterised in that**
   a number of quantization stages is established for each individual source encoding unit ($1_1$, $1_2$,..., $1_n$) over a period of time as an averaged value over all the volumes of data of the video data streams to be processed in each case in the individual points in time of a particular period of time ($T$) in the individual source encoding units ($1_1$, $1_2$,..., $1_n$).

9. Method according to claim 8,
   **characterised in that**
   with one or more video data streams with in each case a transmission quality which is increased in a particular period of time the number of quantization stages in the associated source encoding units ($1_1$, $1_2$,..., $1_n$) is increased in the particular period of time in relation to the averaged value, while the number of quantization stages in the remaining source encoding units ($1_1$, $1_2$,..., $1_n$) is correspondingly reduced in the particular period of time.

10. Device for producing a transport data stream composed of a plurality of video data streams with in each case a source encoding unit ($1_1$, $1_2$,..., $1_n$) for producing a compressed video data stream in each case,
    with a multiplexer (3) for producing a transport data stream from all the compressed video data streams and a statistical multiplexer (2') for controlling the data compression in each source encoding unit ($1_1$, $1_2$,..., $1_n$),
    wherein the statistical multiplexer (2') contains a unit (11) for adjusting the number of quantization stages for each source encoding unit ($1_1$, $1_2$,..., $1_n$),
    wherein units ($4_1$, $4_2$,..., $4_n$, $5_1$, $5_2$,..., $5_n$, $6_1$, $6_2$,..., $6_n$, $7_1$, $7_2$,..., $7_n$, 8, $9_1$, $9_2$,..., $9_n$) are provided for acquiring characteristic values which characterise the volume of data over a particular period of time at different points of the individual video data streams and of the transport data stream,
    wherein comparators ($10_1$, $10_2$, $10_3$, $10_4$, $10_5$, $10_6$, $10_7$, $10_8$, $10_9$) are provided in the statistical multiplexer (2') for comparing the acquired characteristic values with in each case a threshold value associated with the respective characteristic value, and wherein the unit (11) is embodied for adjusting the number of quantization stages for each source encoding unit ($1_1$, $1_2$,..., $1_n$) in order with a fixed number ($N_P$) of picture elements per image and with a fixed transmission capacity of the transmission channel in the period of time considered ($T$) to determine the volume of data ($N_K$) which can be transmitted in the transmission channel, the number of quantization stages ($N_{Qi,l}$) per picture element in each individual image (1) of a video data stream ($i = 1,2,...,n$) depending on the established percentage proportions ($N_{\Delta i,l}$) of picture elements with changes in image content compared with the preceding image with respect to a total number of picture elements over all ($N_B$) of the images (1) of a video data stream to be transmitted within the period of time considered ($T$).

11. Computer programme with programme code means in order to be able to carry out all the steps according to one of claims 1 to 9 when the programme is executed on a computer or a digital signal processor.

12. Computer programme product with in particular programme code means stored on a machine-readable medium in order to be able to carry out all the steps according to one of claims 1 to 9 when the programme is executed on a computer or a digital signal processor.

**Revendications**

1. Procédé de génération d'un flux de données de transport composé de plusieurs flux de données vidéo, comprenant les étapes suivantes :

   • détermination de plusieurs grandeurs caractéristiques pour la caractérisation du volume de données des différents flux de données vidéo et des flux de données de transport pendant une période ($T$) définie,
   • comparaison de chacune des grandeurs caractéristiques déterminées avec au moins une valeur seuil associée à la grandeur caractéristique respective, et
   • réglage du volume de données à transmettre dans chaque flux de données vidéo (i) dans un intervalle de trame en fonction d'un dépassement de la valeur seuil et/ou d'une insuffisance par rapport à celle-ci d'au moins une des grandeurs caractéristiques déterminées,

   dans lequel le réglage du volume de données à transmettre dans chaque flux de données vidéo (*i*) dans l'intervalle de trame est effectué par réglage du nombre d'étages de quantification ($NQi,1$) par point d'image dans chaque flux de données vidéo (*i*), et dans lequel, en cas de nombre ($N_P$) fixe de points d'image par image et en cas de capacité de transmission fixe du canal de transmission pendant la période d'observation ($T$), le volume de données ($N_K$) transmissible dans le canal de transmission, le nombre d'étages de quantification par point d'image dans chaque image (1) distincte d'un flux de données vidéo (i), sont définis en fonction de parts en pourcentage ($N\Delta,i,l$) déterminées de points d'image présentant des modifications de contenu d'image par rapport à l'image précédente, sur un nombre total de points d'image de toutes les images ($N_B$) comprises dans la période d'observation ($T$) des images (1) à transmettre d'un flux de données vidéo.

2. Procédé selon la revendication 1,
   **caractérisé**
   **en ce qu'**une première grandeur caractéristique (ECE(1), ECE(2),..., ECE(n)) dans chaque flux de données vidéo distinct est déterminée avant une compression de données lors d'une pré-analyse des contenus d'image pour un nombre d'images successives, laquelle correspond au volume de données de chaque flux de données vidéo attendu dans une période *(T)* après compression de données et dépend du nombre de différences dans les différents points d'image entre images successives.

3. Procédé selon la revendication 1 ou la revendication 2,
   **caractérisé**
   **en ce qu'**une deuxième grandeur caractéristique (ED(I), ED(2),..., ED(n)) dans chaque flux de données vidéo est déterminée avant une compression de données, laquelle correspond au débit de données du flux de données vidéo attendu après compression de données et dépend des contenus d'image dans des images successives et du procédé de codage source utilisé.

4. Procédé selon l'une des revendications 1 à 3,
   **caractérisé**
   **en ce qu'**une troisième grandeur caractéristique (DRE(1), DRE(2),..., DRE(n)) dans chaque flux de données vidéo est déterminée lors du codage source, laquelle correspond au débit de données actuel du flux de données vidéo après compression de données et dépend des contenus d'image d'images successives actuellement traités dans chaque codeur de source et du procédé de codage source utilisé.

5. Procédé de détermination d'un débit de données constant selon l'une des revendications 1 à 4,
   **caractérisé**
   **en ce qu'**une quatrième grandeur caractéristique (RME(1), RME(2),..., RME(n)) dans chaque flux de données vidéo est déterminée lors du codage source, laquelle correspond au niveau de remplissage de tampon dans un modèle de référence du flux de données vidéo respectif après compression de données.

6. Procédé selon l'une des revendications 1 à 5,
   **caractérisé**
   **en ce qu'**une cinquième grandeur caractéristique (DRX) est déterminée dans le flux de données de transport, laquelle correspond au débit de données actuel du flux de données de transport généré par un multiplexeur (3).

7. Procédé selon l'une des revendications 1 à 6,

   **caractérisé**
   **en ce qu'**une sixième grandeur caractéristique (RMX(1), RMX(2),..., RMX(n)) est déterminée dans un multiplexeur (3) générant le flux de données de transport, laquelle correspond au niveau de remplissage de tampon du modèle de référence associé au flux de données vidéo respectif dans le multiplexeur (3).

8. Procédé selon l'une des revendications 1 à 7,
   **caractérisé**
   **en ce qu'**un nombre d'étages de quantification pour chaque codeur de source ($1_1$, $1_2$, ..., $1_n$) distinct est déterminé pendant une période en tant que valeur moyenne de tous les volumes de données du flux de données vidéo respectif dans les différents moments d'une période (T) définie, à traiter dans les différents codeurs de source ($1_1$, $1_2$, ... , $1_n$).

9. Procédé selon la revendication 8,
   **caractérisé**
   **en ce qu'**en cas d'un ou de plusieurs flux de données vidéo ayant chacun une qualité de transmission supérieure pendant une période définie, le nombre d'étages de quantification dans les codeurs de source ($1_1$, $1_2$, ..., $1_n$) correspondants dans la période définie est augmenté par rapport à la valeur moyenne, tandis que le nombre d'étages de quantification dans les autres codeurs de source ($1_1$, $1_2$,..., $1_n$) est diminué en conséquence dans la période définie.

10. Dispositif pour la génération d'un flux de données de transport composé de plusieurs flux de données vidéo avec des codeurs de source ($1_1$, $1_2$, ..., $1_n$) respectifs pour la génération de flux de données vidéo respectifs comprimés, un multiplexeur (3) pour la génération d'un flux de données de transport à partir de tous les flux de données vidéo comprimés et un multiplexeur statistique (2') pour la commande de compression de données dans chaque codeur de source ($1_1$, $1_2$,..., $1_n$),

dans lequel le multiplexeur statistique (2') comprend une unité (11) pour le réglage du nombre d'étages de quantification pour chaque codeur de source ($1_1$, $1_2$, ..., $1_n$),

dans lequel sont prévues des unités ($4_1$, $4_2$, ..., $4_n$, $5_1$, $5_2$, ..., $5_n$, $6_1$, $6_2$, ..., $6_n$, $7_1$, $7_2$, ..., $7_n$, 8, $9_1$, $9_2$, ..., $9_n$) pour la détermination de grandeurs caractéristiques, lesquelles caractérisent le volume de données pendant une période définie à différents emplacements des différents flux de données vidéo et du flux de données de transport,

dans lequel sont prévus dans le multiplexeur statistique (2') des comparateurs ($10_1$, $10_2$, $10_3$, $10_4$, $10_5$, $10_6$, $10_7$, $10_8$, $10_9$) pour la comparaison des grandeurs caractéristiques déterminées avec une valeur seuil associée à la grandeur caractéristique respective, et

dans lequel l'unité (11) est prévue pour le réglage du nombre d'étages de quantification pour chaque codeur de source ($1_1$, $1_2$, ..., $1_n$), pour, en cas de nombre ($N_P$) fixe de points d'image par image et en cas de capacité de transmission fixe du canal de transmission pendant la période d'observation (T), définir le volume de données ($N_K$) transmissible dans le canal de transmission, le nombre d'étages de quantification ($N_{Qi, I}$) par point d'image dans chaque image (1) distincte d'un flux de données vidéo (i=1,2,...,n), en fonction de parts en pourcentage ($N_{\Delta,i,I}$) déterminées de points d'image présentant des modifications de contenu d'image par rapport à l'image précédente, sur un nombre total de points d'image de toutes les images ($N_B$) comprises dans la période d'observation (T) des images (1) à transmettre d'un flux de données vidéo.

**11.** Programme informatique avec des moyens de code-programme, permettant l'exécution de toutes les étapes selon l'une des revendications 1 à 9, quand le programme est exécuté sur un ordinateur ou un processeur de signal numérique.

**12.** Produit de programme informatique avec des moyens de code-programme mémorisés notamment sur un support lisible par machine, permettant l'exécution de toutes les étapes selon l'une des revendications 1 à 9, quand le programme est exécuté sur un ordinateur ou un processeur de signal numérique.

Fig. 1

Fig. 2

EP 2 541 957 B1

Erwartete Komplexität
$EC_E(1...n)$

$10_1$

$\sum EC_E(1...n) \geq$ Schwellwert
$(EC_E)$

11

Voranalyse
$(n^*)$

n Datenrahmen

Erwartete Datenrate $ED_E$

$10_2$

$\sum ED_E(1...n) \geq$ oberer Schwellwert $(ED_E)$

$\sum ED_E(1...n) \leq$ unterer Schwellwert $(ED_E)$

Kostenabschätzung
$(n^*)$

Datenrate Quell-Kodierer $DR_E$

$10_4$ $10_3$

$\sum DR_E(1...n) \geq$ Schwellwert
$(DR_E)$

Quell-Kodierer
$(n^*)$

QP(neu) = QP(alt) + QP(Delta)

QP (Delta)

n

Messwert $RM_E$

$10_5$

$\sum RM_E(1...n) \geq$ oberer Schwellwert $(RM_E)$

$\sum RM_E(1...n) \leq$ unterer Schwellwert $(RM_E)$

Referenzmodell
$(n^*)$

Datenrate Multiplexer $DR_X$

$10_7$ $10_6$

$\sum DR_X <$ nominal$(DR_X)$

Multiplexer
$(n^*)$

n Datenstrom

„Null-Bytes" einfügen

Messwert $RM_X$

$10_8$

$\sum RM_X(1...n) \geq$ oberer Schwellwert $(RM_X)$

$\sum RM_X(1...n) \leq$ unterer Schwellwert $(RM_X)$

$10_9$

Referenzmodell
$(n^*)$

Datenstrom

Einheit zur Einstellung der Anzahl von Quantisierungsstufen

Fig. 3

Fig. 4

**IN DER BESCHREIBUNG AUFGEFÜHRTE DOKUMENTE**

**In der Beschreibung aufgeführte Patentdokumente**

- DE 102008017290 A1
- US 2002094031 A1
- US 2005010960 A1
- WO 2011075160 A1

**In der Beschreibung aufgeführte Nicht-Patentliteratur**

- Joint Video Coding and Statistical Multiplexing for Broadcasting over DVB-H Channels. **REZAEI M et al.** IEEE TRANSACTIONS ON MULTIMEDIA. IEEE SERVICE CENTER, 01. Dezember 2008, vol. 10, 1455-1464
- Linear rate control and optimum statistical multiplexing for H.264 video broadcast. **HE Z et al.** IEEE TRANSACTIONS ON MULTIMEDIA. IEEE SERVICE CENTER, 01. November 2008, vol. 10, 1237-1249
- Bit Allocation and Constraints for Joint Coding of Multiple Video Programs. **LIMIN WANG et al.** IEEE TRANSACTIONS ON CIRCUITS AND SYSTEMS FOR VIDEO TECHNOLOGY. IEEE SERVICE CENTER, 01. September 1999, vol. 9